# EUROPEAN PATENT SPECIFICATION

(11) **EP 4 509 685 B1**
(45) Date of publication and mention of the grant of the patent: **21.01.2026**
(21) Application number: 23275117.2
(22) Date of filing: 14.08.2023
(51) Int. Cl.: E05C 17/30, B64D 29/06, E05B 41/00

(54) **HOLD OPEN ROD**
STÜTZSTANGE
TIGE DE RETENUE EN POSITION OUVERTE

(43) Date of publication of application: 19.02.2025
(73) Proprietor: Crompton Technology Group Limited, Oxfordshire, OX16 4XD (GB)
(72) Inventor: TRIPATHI, Amit Kumar, OX16 4XD Banbury (GB); PETHICK, Jonathan David, OX16 4XD Banbury (GB)
(74) Representative: Casalonga

(56) References cited:
- EP-A1- 3 272 655
- WO-A1-2015/143217
- WO-A1-2018/203946
- US-B1- 7 654 371

## Description

### Technical Field

This disclosure relates to a hold open rod. In particular, the disclosure may be applicable to telescopic hold open rods configured to be locked in an extended state.

### Background Art

Hold open rods can be used to support a mechanical load and are typically used to support and hold open a lid, hatch, door or the like while maintenance or inspection is taking place. A simple hold open rod may be a single length of material (e.g. a metal rod) which is placed in compression between the lid, hatch, door, etc. and another structure so as to obstruct the closing of the lid, hatch, door, etc. and thereby hold it open. These are sometimes referred to as stay rods. Some more complex hold open rods may be extendable from a stowed state to an extended state when in use, i.e. where the length of the hold open rod is shorter in the stowed state than in the extended state. A hold open rod can be moved from the stowed state to the extended state by a number of mechanisms. For example, a hold open rod may include telescopic or foldable parts.

Hold open rods may be used in aircraft, in particular to support the cowl door of an engine. For example, a hold open rod may be used to hold the cowl door open while the engine is undergoing maintenance. When the cowl door is closed, the hold open rod may be stored in the stowed state.

When the hold open rod is in the extended state, being used to support a mechanical load (i.e. the weight of the door), it is often desirable to prevent the hold open rod from unintentionally or accidentally being returned to the stowed state. Therefore, some hold open rods include a locking mechanism to prevent the hold open rod in the extended state from returning to the stowed state.

In some examples, a locking mechanism for a hold open rod includes a latch. When the hold open rod is in the extended state, the latch connects a first part of the hold open rod to a second part of the hold open rod, thereby preventing relative movement between the first part and the second part.

WO 2018/203946 A1 discloses a hold open rod assembly including an outer tubular structure and an inner tubular structure positioned for telescoping movement relative to the outer tubular structure. A locking mechanism retains the hold open rod assembly in an extended state to support a panel of an aircraft nacelle in an open position at the selection of a user.

EP 3272655 A1 discloses a telescopically extendable support mast for supporting pipe and/or hose assemblies of an aircraft refuelling system.

US 7654371 B1 discloses a hold open rod including telescoping inner and outer members, a release collar circumferentially encircling the outer member and at least one rotatably mounted pawl disposed in the outer member, the at least one rotatably mounted pawl being movable between unlocked and locked positions.

### Summary of the Disclosure

According to a first aspect of the present invention, there is provided a hold open rod in accordance with claim 1.

The locking mechanism of the present invention ensures that, when the locking member is in the second position, the hold open rod will not accidentally return to the stowed state because the second surface of the locking member blocks the first surface of the first member from moving into the unlocking region. Therefore, it is safe for the hold open rod to support a mechanical load, because the hold open rod will remain locked in the extended state.

Furthermore, the locking mechanism of the present invention ensures that the locking member is held out of contact with the first elongate member when the hold open rod is unlocked. This helps to prevent wear on the first elongate member because the locking member does not drag against the first elongate member as it moves between the first configuration and the second configuration. This can help to increase the lifetime of the hold open rod as well as avoid creating unwanted particles (e.g. scrapings) which may hamper operation or further increase wear.

The locking region may be at a first end of the second elongate member and the unlocking region may be at a second end of the second elongate member. In some examples, the boundary between the locking region and the unlocking region is at the second surface of the locking member when the locking member is in the second position.

In some examples, the first surface of the first elongate member and the second surface of the locking member are configured to abut when the locking member is in the locked state. In some examples, when the first surface of the first elongate member abuts against the second surface of the locking member, the first elongate member is blocked from moving into the unlocking region. Therefore, the hold open rod remains in the extended state. This helps to ensure that it is safe for the hold open rod to support a mechanical load, because the hold open rod will not accidentally return to the first configuration.

In some examples, the first surface of the first elongate member and the second surface of the locking member abut at an angle of less than 90 degrees to the longitudinal axis of the second elongate member, such that the locking member is hooked over the first elongate member.

In some examples, the first surface of the first elongate member and the second surface of the locking member abut at an angle of less than 85 degrees to the longitudinal axis of the second elongate member, in some examples less than 80 degrees, in some examples less than 75 degrees, in some examples less than 70 degrees.

When the locking member is hooked over the first elongate member, this may help to ensure that the locking member and/or the first elongate member cannot move relative to the second elongate member, in particular in a direction parallel to the longitudinal axis of the hold open rod. This may help to ensure that locking member remains in the second position such that the first surface of the first elongate member cannot return to the unlocking region and the hold open rod remains in a locked state. The hooking means that the locking member cannot easily retract (or be caused to retract) to its unlocked position due to the overlap caused by the acute angle. Thus, while loaded (e.g. while the hold open rod is supporting a door or hatch), the locking member is held securely in the locked position and cannot easily be unlocked without first removing or reducing the load.

In some examples, the locking member is rotatably moveable between the first position and the second position.

In some examples, the locking member is mounted to the second elongate member. The locking member may be mounted to the second elongate member in many different ways. In some examples, the locking member is mounted to the second elongate member by a pivot. The locking member being mounted to the second elongate member may help to ensure that, when the first surface of the first elongate member comes into contact with the second surface of the locking member, the first elongate member is prevented from moving relative to the second elongate member, because the locking member is connected to the second elongate member. This can help to ensure that the first surface of the first elongate member is prevented from moving into the unlocking region.

In some examples, the locking mechanism further comprises a third member;
wherein the third member is configured to cause the locking member to move from the first position to the second position.

In some examples, the locking mechanism further comprises a third member;
wherein the third member is configured to cause the locking member to move from the second position to the first position.

The third member may take any suitable form and the third member may cause the locking member to move from the first position to the second position and/or from the second position to the first position by any mechanism. For example, the third member may act upon the locking member using any of a frictional force, an electromagnetic force, a contact force, tension and/or torsion. In some examples, a first surface of the locking member pushes against the locking member to cause the locking member to move from the first position to the second position and/or a second surface of the locking member pushes against the locking member to cause the locking member to move from the second position to the first position.

In some examples, the third member may be operated by a person using the hold open rod. Therefore, in some examples, the third member provides a means for a person to operate the locking mechanism of the hold open rod.

In some examples, the third member is configured to hold the locking member in the first position when the first surface is in the unlocking region.

In some examples, the third member is configured to hold the locking member in the second position when the locking mechanism is in the locked state.

The third member may take any suitable form and the third member may cause the locking member to be held in the first position and/or in the second position by any mechanism. For example, the third member may act upon the locking member using any of a frictional force, an electromagnetic force, a contact force, tension and/or torsion. In some examples, a first surface of the third member is configured to hold the locking member in the first position and/or a second surface of the third member is configured to hold the locking member in the second position.

The third member may be used to ensure that the locking member is in its intended position during each part of the locking process. In some examples, the locking member may be held in the first position when the first surface of the first elongate member is in the unlocking region. This may help to ensure that the second surface of the locking member is held out of contact with the first surface of the first elongate member, such that the first surface of the first elongate member is moveable from the unlocking region to the locking region. In some examples, the locking member may be held in the second position when the first surface of the first elongate member is in the locking region. This may help to ensure that the second surface of the locking member is configured to block the first surface of the first elongate member, such that the first surface of the first elongate member cannot move from the locking region to the unlocking region.

In some examples, the third member is moveable between a first position and a second position;
wherein the third member is arranged such that when the third member is in the first position, the locking member is held in the first position; and
wherein the third member is arranged such that when the third member is in the second position, the locking member is held in the second position.

In some examples, moving the third member between the first position and the second position comprises moving the third member relative to the second elongate member. The third member may be moved by any mechanism. In some examples, the third member is slidably moveable between the first position and the second position.

In some examples, the third member is configured to be moved between the first position and the second position by a person using the hold open rod. Therefore, in some examples, the third member provides a means for a person using the hold open rod to operate the locking mechanism by holding the locking member in the desired position.

In some examples, the third member is moveable between a first position and a second position; and
wherein, as the third member moves from the first position to the second position, the third member is configured to cause the locking member to move from the first position to the second position.

In some examples, the third member is moveable between a second position and a first position; and
wherein, as the third member moves from the second position to the first position, the third member is configured to cause the locking member to move from the second position to the first position.

In some examples, at least one surface of the third member is configured to push the first member from the first position to the second position as the third member moves from the first position to the second position. In some examples, at least one surface of the third member is configured to push the first member from the second position to the first position as the third member moves from the second position to the first position.

In some examples, the third member is configured to be moved between the first position and the second position by a person using the hold open rod. Therefore, the third member may provide a means for a person using the hold open rod to move the locking member between the first position and the second position.

In some examples, the locking mechanism comprises a first biasing member configured to bias the third member towards the second position.

The first biasing member may be any suitable type of biasing mechanism. In some examples, the first biasing mechanism is a spring. In some examples, the first biasing mechanism is connected at a first end to the third member and at a second end to the second elongate member. The first biasing member may help to ensure that the locking member is moved from the first position to the second position and/or that the locking member is held in the second position. This may help to ensure that the hold open rod is moved to and/or remains in the locked state.

In some examples, the first biasing member may help to reduce (or even eliminate) the force required to move the third member into the second position. This may help to ensure that a person using the hold open rod can place the third member into the second position quickly and easily.

In some examples, the force exerted on the third member by the first biasing member may be sufficient to move and/or hold the third member in the second position without any external forces (e.g. from a person using the hold open rod). This may help to ensure that the third member defaults to the second position (e.g. if the third member is left between the first position and the second position). This may help to ensure that the hold open rod defaults to the locked state. Thus, when the locking mechanism is able to do so, it is biased into the locking state so that it will default to the locked state. This allows convenient operation of the hold open rod as the locking mechanism will be biased into the locked position once the first elongate member and the second elongate member have reached a suitably extended state (e.g. suitable for holding a door or hatch open).

In some examples, the locking mechanism further comprises a blocking member situated in an aperture of the second elongate member and moveable between a first position and a second position;
wherein, when the blocking member is in the first position, the blocking member is configured to prevent relative movement between the second elongate member and the third member.

In some examples, the blocking member is configured to remain in the aperture as the blocking member moves between the first position and the second position. In some examples, the aperture may be configured to keep the blocking member in the desired position relative to the second elongate member.

The blocking member may be configured to prevent relative movement between the second elongate member and the third member using any mechanism. For example, the blocking member may act upon the second and/or the third member using any of a frictional force, an electromagnetic force, a contact force, tension and/or torsion.

In some examples, when the blocking member is in the first position, it is in contact with the third member and when the blocking member is in the second position, it is not in contact with the third member. In some examples, the contact between the blocking member and the third member is configured to prevent movement of the third member relative to the second member. In some examples, moving between the first position and the second position comprises the blocking member moving radially inwards, towards the longitudinal axis of the hold open rod.

In some examples, the blocking member is configured to prevent relative movement between the second elongate member and the third member when the third member is in the first position. In the first position, the third member may be configured to hold the locking member in the first position. Therefore, the blocking member may help to ensure that the locking member is held in the first position (e.g. while the first surface of the first member is in the unlocking region).

In some examples, the third member is moveable between a first position and a second position;
wherein the third member comprises a recess; and
wherein the recess is configured to receive a portion of the blocking member when the third member is in the first position and the blocking member is in the first position, such that the third member is locked in the first position.

In some examples, the locking mechanism further comprises a fourth member comprising a recess;
wherein the recess is configured to receive a portion of the blocking member when the blocking member is in the second position;
wherein, when the blocking member is in the second position, the third member is moveable relative to the second elongate member.

In some examples, the blocking member may be located between the third member and the fourth member (e.g. in a radial direction from the longitudinal axis of the hold open rod). When a portion of the blocking member is inside the recess of the fourth member, the blocking member is not in contact with the third member (or at least not in contact such that it blocks movement of the third member). Therefore, the third member is moveable relative to the second member.

The recess may be any shape and size. In some examples, the sides of the recess include a sloped portion. This may help to allow the blocking member to enter and/or exit the recess of the fourth member (e.g. by rolling along the sloped portion).

In some examples, the fourth member is moveable between a first position and a second position;
wherein the recess is configured to receive a portion of the blocking member when the fourth member is in the second position.

In some examples, as the first elongate member moves from the first configuration and a second configuration, the first elongate member is configured to cause the fourth member to move from the first position to the second position.

The first elongate member may cause the fourth member to move from the first position to the second position by any mechanism. For example, the first elongate member may act upon the fourth member using any of a frictional force, an electromagnetic force, a contact force, tension and/or torsion. In some examples, the first elongate member may push against the fourth member. For example the first elongate member may push the fourth member parallel to the longitudinal axis of the hold open rod as it moves from the stowed configuration to the extended configuration. The first elongate member may push on the fourth member directly or indirectly via an intervening component.

In some examples, the locking mechanism comprises a second biasing member;
wherein the second biasing member is configured to bias the fourth member towards the first position.

The second biasing member may be any type of biasing mechanism. In some examples, the second biasing mechanism is a spring. In some examples, the second biasing mechanism is connected at a first end to the fourth member and at a second end to the second elongate member. The second biasing member may help to ensure that the blocking member is able to move back into the first position during the unlocking process.

The blocking member may take many different forms. For example, it may be a pin or a cylinder that can move within the aperture. A cylinder may be arranged with its axis arranged parallel to an axis of the aperture (e.g. radially with respect to the hold open rod). Alternatively a cylinder may be arranged so that it rolls along the third and/or fourth members as they slide axially past the aperture. However, in some examples the blocking member is a ball. This is particularly convenient for reduced friction, especially where the third member may rotate in addition to moving axially (as discussed later).

In some examples, the first elongate member and the second elongate member are slidably moveable substantially parallel to the longitudinal axis of the hold open rod between the first configuration and the second configuration. In some examples, when the first elongate member and the second elongate member move from the first configuration to the second configuration, the length of the hold open rod increases along the longitudinal axis of the hold open rod. Therefore, the hold open rod can move between a stowed state (e.g. when not in use) and an extended state (e.g. when in use).

In some examples, the second elongate member is a hollow tube;
wherein the second elongate member circumferentially surrounds the first elongate member.

When the second elongate member circumferentially surrounds the first elongate member in a plane that is perpendicular to the longitudinal axis of the hold open rod, the cross-section of the second elongate member encloses the cross-section of the first elongate member. In some examples, this configuration may be used to facilitate a telescoping mechanism of the hold open rod.

In some examples, the second elongate member is configured to circumferentially surround the first elongate member along a substantial portion of the length of the first elongate member when in the stowed state. That is, the first elongate member may be configured to be located substantially inside the second elongate member in the stowed state, i.e. when the first elongate member and the second elongate member are in the first configuration. This may help to minimise the length of the hold open rod e.g. when the hold open rod is in a fully retracted state.

In some examples, the second elongate member may be configured to circumferentially surround the first elongate member along only a portion of the hold open rod. For example, when the first elongate member and the second elongate member are in the second configuration, a significant portion of the first elongate member may extend beyond the axial length of the second elongate member. In the extended state (second configuration), the first elongate member may extend further out of the second elongate member than it does when they are in the stowed state (first configuration).

The first elongate member and the second elongate member may have any cross-sectional shape. For example, the first elongate member and/or the second elongate member may be circular, elliptical, triangular, square, rectangular, pentagonal, hexagonal in cross-section. In some examples, the first elongate member and the second elongate member have the same cross-sectional shape.

In some examples, the first elongate member and the second elongate member are concentric.

When the first elongate member and the second elongate member are concentric, in a plane that is perpendicular to the longitudinal axis of the hold open rod, the cross-section of the first elongate member has the same centre as the cross-section of the first elongate member. In some examples, the central axis of the first elongate member and the second elongate member are coaxial with the longitudinal axis of the hold open rod. In some examples, the first elongate member and the second elongate member are concentric and the second elongate member circumferentially surrounds the first elongate member.

In some examples, the first elongate member is formed from fibre reinforced polymer material (e.g. carbon fibre, glass fibre, etc.). Fibre reinforced polymer materials may be advantageous in some applications, such as in an aircraft, owing to their low weight and high strength. However, such materials may be more susceptible to frictional wear (e.g. from a locking mechanism dragging or scraping against the member during deployment). In particular, if this frictional wear occurs over the course of many operations (parts are typically required to withstand thousands of actuations safely) such wear would not be feasible on a fibre reinforced polymer part. Therefore the non-contact mechanism of the present invention may enable the use of light weight, fibre reinforced polymer materials. This may help to save fuel and cost when deployed on an aircraft. In some examples, the second elongate member is formed from fibre reinforced polymer material (e.g. carbon fibre, glass fibre, etc.).

In some examples, the locking mechanism comprises a plurality of locking members;
wherein the plurality of locking members are circumferentially distributed around the hold open rod.

The locking mechanism may comprise any number of locking members. The plurality of locking members may all be similar (e.g. in shape, size, axial position on the hold open rod, and/or mechanism of operation). In some examples, the locking mechanism may have two, three or four locking members.

A plurality of locking members may provide a level of redundancy to the system. For example, if one locking member fails (e.g. breaks or becomes stuck in the first position), another locking member may still be operable such that the locking mechanism can still be used. Therefore, using a plurality of locking members may help to increase the reliability of the locking mechanism.

Furthermore, if a plurality of locking members are used this may help to reduce the load on any individual locking mechanism. This may help to reduce the wear and/or stress on each locking member, thereby helping to increase the lifetime of the hold open rod.

In some examples, the plurality of locking member are evenly circumferentially distributed around the hold open rod. For example, if there are four locking members, each locking member may be separated from the adjacent locking members by 90 degrees around the circumference of the hold open rod. This may help to ensure that force is evenly distributed around the hold open rod, which may help to reduce wear on the first elongate member from contact with the locking members.

In some examples, the third member is a sleeve;
wherein the third member circumferentially surrounds the second elongate member.

When the third elongate member circumferentially surrounds the second elongate member, in a plane that is perpendicular to the longitudinal axis of the hold open rod, the cross-section of the third elongate member encloses the cross-section of the second elongate member. In some examples, the third member is configured to circumferentially surround the second elongate member along a portion of the hold open rod. For example, part of the second elongate member may extend axially beyond the third member.

In some examples, the third member may form the outermost surface of a portion of the hold open rod. In some examples, the third member may be operated by a person using the hold open rod. Therefore, providing the third member as the outermost surface of the hold open rod may help to ensure that a person using the hold open rod can access the third member easily.

Furthermore, in some examples, the third member may circumferentially surround a hold open rod comprising a plurality of locking members that may be circumferentially distributed around the hold open rod. In some examples, this may help to ensure that the third member can act upon the plurality of locking members in the same manner. For example, if the third member is configured to push the plurality of locking members between the first position and the second position, a third member that circumferentially surrounds the hold open rod may be able to maintain contact with all of the locking members at the same time.

In some examples, the third member is moveable between a first position and a second position;
wherein the first position of the third member comprises a first axial position and a first angular position; and
wherein the second position of the third member comprises a second axial position and a second angular position.

This may be advantageous in examples where a person using the hold open rod is moving the third member between the first position and the second position. Moving the third member both axially and angularly requires two separate movements from a user moving the third member (i.e. movement along two different directions). This helps to ensure that the third member is not accidentally moved (e.g. from the second position to the first position). This can help to prevent the hold open rod being accidentally moved from the locked state into the unlocked state. The axial movement and angular movement may be separate actions such that one must be completed before the other, e.g. first axial movement then angular movement to lock the hold open rod (which would then require first angular movement, then axial movement to unlock the hold open rod) or vice versa.

The third member may move from the first position to the second position using any mechanism. For example, the third member may be slidably moveable between the first position and the second position. In some examples, the third member may move between the first position and the second position using a pin and a groove. The pin may be connected to the third member and the groove may be formed as an L-shaped aperture in the second elongate member. As the third member moves between the first position and the second position, the pin is configured to move from a first position inside the groove to a second position inside the groove. The movement of the pin in the groove results in the third member moving both axially and angularly between the first position and the second position.

### Brief Description of the Drawings

Certain examples of the present disclosure will now be described with reference to the accompanying drawings in which:
Figures 1a-c are cross-sectional views of an engine system comprising a hold open rod;
Figures 2a-c are cross-sectional views of a hold open rod comprising a locking mechanism of the present invention;
Figure 3 is a cross-sectional view of a hold open rod comprising a locking mechanism of the present invention, in which the locking mechanism is in an unlocked state;
Figure 4 is a cross-sectional view of a hold open rod comprising a locking mechanism of the present invention, in which the locking mechanism is in a locked state;
Figure 5 is a cross-sectional view of a hold open rod comprising a locking mechanism of the present invention, in which the hold open rod is in a maximally extended state;
Figures 6a and 6b are perspective views of a hold open rod comprising a locking mechanism of the present invention with its outer sleeve not shown; and
Figure 7 is a cross-sectional view of a hold open rod comprising a locking mechanism of the present invention.

### Detailed Description

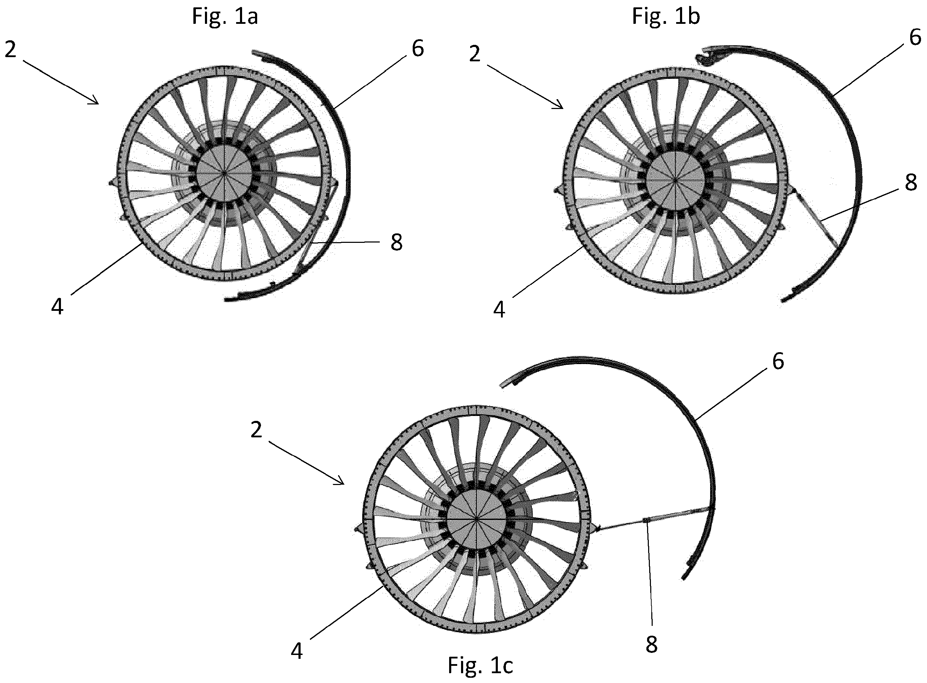

Figures 1a-c are cross-sectional views of an engine system 2 comprising a hold open rod 8. The engine system 2 includes an engine 4, a door 6 and a hold open rod 8.

The door 6 is connected to the engine 4 and is moveable between a closed position and an open position. Figure 1a shows the door 6 in the closed position. Figure 1b shows the door 6 moving between the closed position and the open position. Figure 1c shows the door 6 in the open position.

The door 6 may be in the closed position when the engine is in operation. The door 6 may be moved to the open position in order to provide access to the engine 4, for example when the engine 4 is undergoing maintenance. In some examples, the door 6 is a fan cowl door of an engine 4. The hold open rod 8 may be used for other doors or hatches on the engine system 2 or for other doors or hatches in other equipment.

A first end of the hold open rod 8 is connected to the engine 4 and a second end of the hold open rod 8 is connected to the door 6. When the door 6 is in the closed position, the hold open rod 8 is in a stowed state. The hold open rod 8 can be seen in the stowed state in Figure 1a.

As the door 6 moves from the closed position to the open position, the length of the hold open rod 8 is configured to change. In some examples, the length of the hold open rod 8 may initially decrease compared to the stowed state. This can be seen in Figure 1b. The hold open rod 8 may then extend as the door 6 continues to open. As the door 6 opens, the hold open rod 8 remains connected at a first end to the engine 4 and at a second end to the door 6. In this example, the length of the hold open rod 8 changes (e.g. decreases or extends) by means of a telescoping mechanism.

Figure 1c shows the hold open rod 8 in an extended state. In the extended state, the hold open rod 8 is configured to support the door 6 while it is in the open position. For example, the hold open rod 8 may be used to hold the door 6 in the open position while the engine 4 is undergoing maintenance. For safety purposes, it is often desirable to lock the hold open rod 8 in the extended position, so that the door 6 does not accidentally return to the closed position. Therefore, a hold open rod 8 may include a locking mechanism.

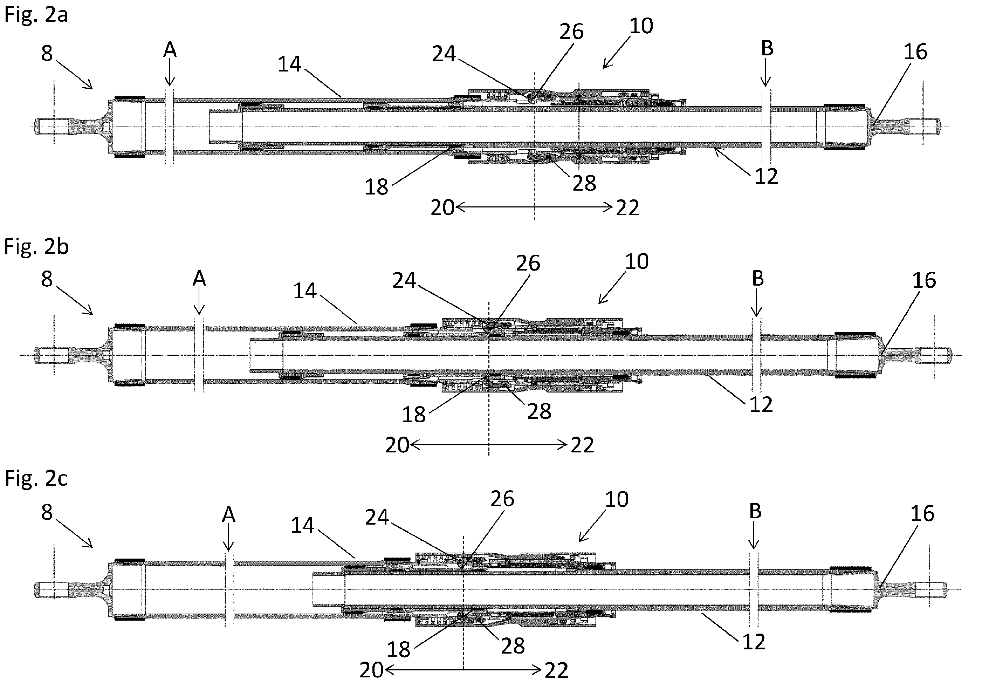

Figures 2a-c are cross-sectional views of a hold open rod 8 comprising a locking mechanism 10 of the present invention. Figure 2a shows the hold open rod 8 in an unlocked state. Figure 2b shows the hold open rod 8 in a locked state. Figure 2c shows the hold open rod 8 in a maximally extended state.

In each of Figures 2a-c, regions A and B are illustrated as a discontinuity in the hold open rod 8. However, it will be understood that these regions are for illustrative purposes only and are used to indicate that the length of the hold open rod 8 is in fact greater than is shown in the figures.

The hold open rod 8 includes a first elongate member 12 and a second elongate member 14. The first elongate member 12 is configured to slide relative to the second elongate member 14 along the longitudinal axis 16 of the hold open rod 8. In this example, the first elongate member 12 and the second elongate member 14 are concentric hollow tubes and the second elongate member 14 circumferentially surrounds the first elongate member 12. The first elongate member 12 includes a first surface 18. The first surface 18 is a shoulder that faces substantially axially towards the left in Figures 2a-2c.

In this example, the first elongate member 12 is formed from a first part 12a and a second part 12b, and the first surface 18 is formed in the first part 12a. In some examples, the first part 12a and the second part 12b of the first elongate member 12 are formed from different materials. For example, the first part 12a may be metallic and the second part 12b may be a fibre reinforced polymer. This may be advantageous because the first part 12a has higher hardness to avoid wear from contact with the locking member 24, whereas the second part 12b has lower weight. The first part 12a and the second part 12b may be formed separately and connected in any suitable manner. However, in some examples, the first elongate member 12 is formed as a single (e.g. unitary) piece of material and the first surface 18 is formed integrally with the first elongate member 12.

The locking mechanism 10 includes a locking member 24. In this example, the locking member 24 is fixedly mounted to the second elongate member 14 by a pivot 28. In this example, the locking member 24 is rotatably moveable between a first position and a second position. The locking member 24 includes a second surface 26. The second surface 26 faces substantially towards the right in Figures 2a-2c so that it when it is in the locked configuration it can face towards and abut the first surface 18.

The second elongate member 14 includes an unlocking region 20 and a locking region 22. The second surface 26 of the locking member 24 defines the boundary between the unlocking region 20 and the locking region 22 such that the unlocking region 20 is on one side of the second surface 26 (towards one axial end of the second elongate member 14) and the locking region 22 is on the other side of the second surface 26 (towards the opposite axial end of the second elongate member 14).

The locking mechanism will now be described in reference to Figures 2a-c. The first elongate member 12 is configured to move between a first configuration and a second configuration. The first configuration is the stowed, unlocked configuration shown in Figure 2a. The second configuration is the extended, locked configuration shown in Figure 2b.

In the first configuration, shown in Figure 2a, the first surface 18 of the first elongate member 12 is in the unlocking region 20, i.e. it lies to the left (in Figure 2a) of the second surface 26 of the locking member 24 (the axial location of the second surface 26 being represented by the dashed vertical line). When the first surface 18 of the first elongate member 12 is in the unlocking region 20, the locking member 24 is held in the first position. When the locking member 24 is in the first position, the locking member 24 is held out of contact with the first elongate member 12. In particular, the second surface 26 of the locking member 24 is not in contact with the first surface 18 of the first elongate member 12. This allows the first elongate member 12 to move relative to the second elongate member 14. In addition, the locking member 24 is held out of contact with the outer surface of the first elongate member 12 such that there is no contact (and no scraping) as the first elongate member 12 slides past the locking member 24 as it moves from the unlocked configuration to the locked configuration. Holding the locking member 24 out of contact throughout this motion reduces wear and extends the service life of the rod 8. One particular advantage of this arrangement is that parts of the hold open rod can be formed from lighter weight material such as fibre reinforced polymer material (e.g. carbon fibre, glass fibre, etc.) Such materials are more susceptible to the frictional wear that occurs when the locking mechanism is allowed to drag or scrape during deployment. Over the course of many operations (parts are typically required to withstand thousands of actuations safely) such wear would not be feasible on a fibre reinforced polymer part. Therefore the non-contact mechanism of the present invention enables the use of such light weight materials, saving fuel and cost when deployed on an aircraft.

To extend the hold open rod 8, the first elongate member 12 is slidably moved relative to the second elongate member 14. As the first elongate member 12 slides between the first configuration and the second configuration, the first surface 18 of the first elongate member 12 is configured to move from the unlocking region 20 of the hold open rod 8 to the locking region 22 of the hold open rod 8.

When the first surface 18 of the first elongate member 12 has moved to the locking region 22, the locking member 24 can be moved to the second position, shown in Figure 2b. The mechanism for moving the locking member 24 that is used in the example of Figures 2a-c will be discussed in more detail below. When the locking member 24 is in the second position, the second surface 26 of the locking member 24 can be dropped in behind the first surface 18 and thus blocks the first surface 18 of the first elongate member 12 from moving back into the unlocking region 20. Therefore, the hold open rod 8 is locked into the extended configuration shown in Figure 2b in that the hold open rod 8 cannot move back to the stowed configuration shown in Figure 2a. This is advantageous if a mechanical load is applied to the hold open rod 8 when it is in the extended state because the hold open rod 8 will not accidentally return to the stowed state.

In this example, the hold open rod 8 has a third configuration, being the fully extended configuration shown in Figure 2c. The third configuration may be used during locking and unlocking of the hold open rod 8 and will be discussed in greater detail below.

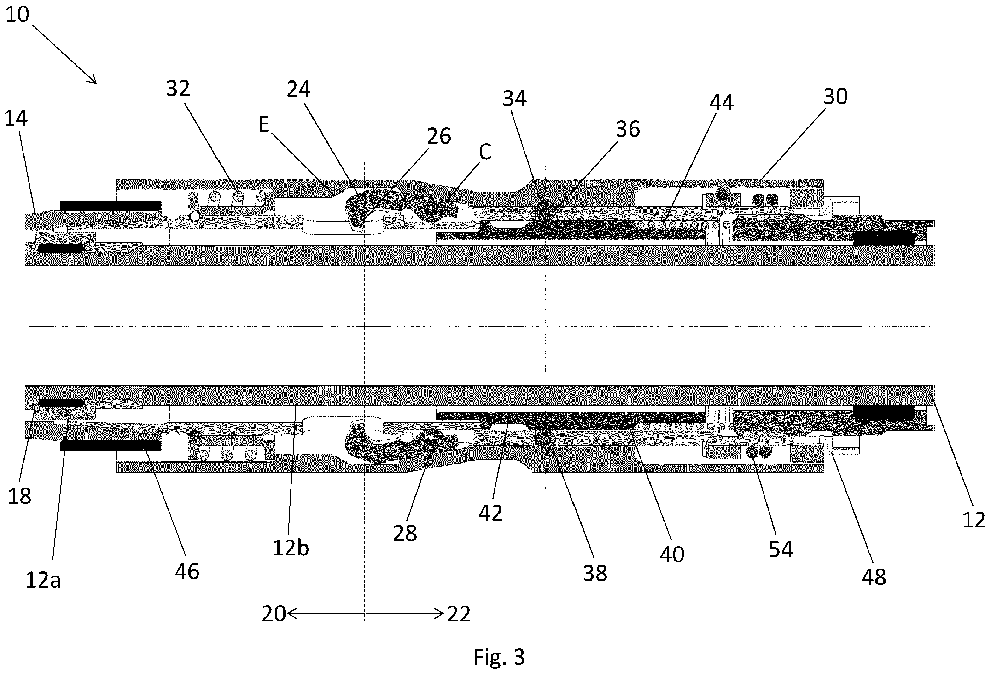

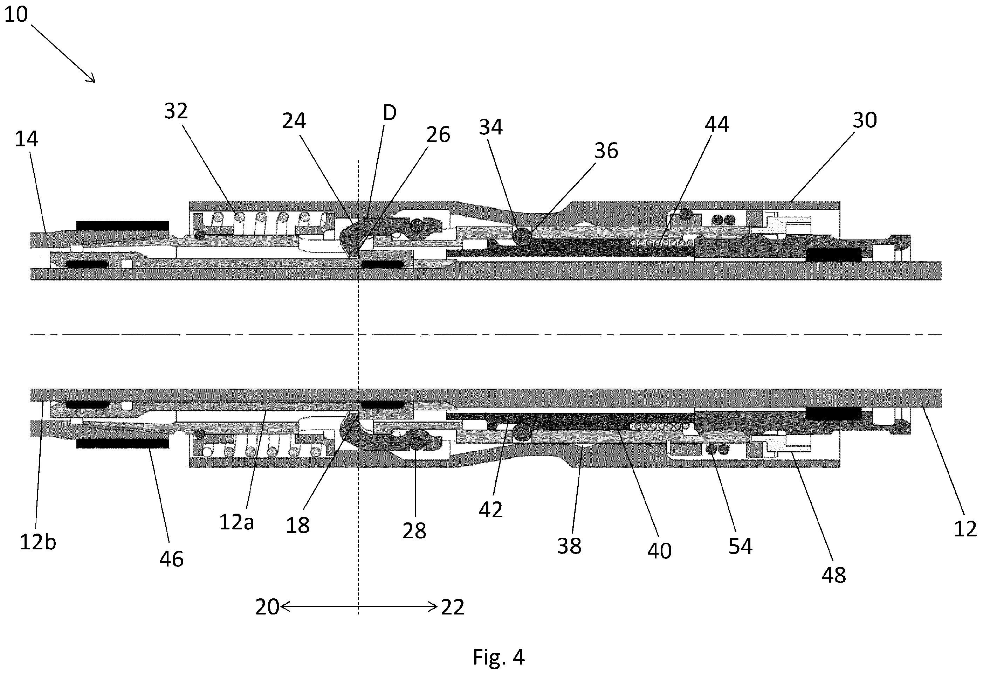

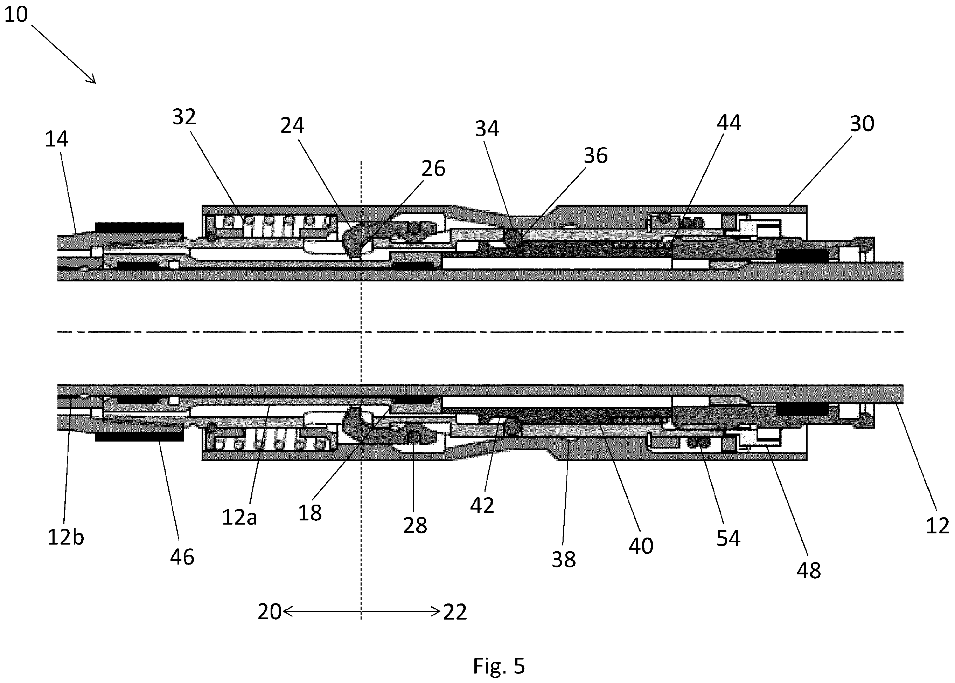

Figure 3 is a cross-sectional view of a hold open rod 8 comprising a locking mechanism 10 of the present invention, in which the locking mechanism 10 is in an unlocked state. Figure 4 is a cross-sectional view of a hold open rod 8 comprising a locking mechanism 10 of the present invention, in which the locking mechanism 10 is in a locked state. Figure 5 is a cross-sectional view of a hold open rod 8 comprising a locking mechanism 10 of the present invention, in which the hold open rod 8 is in a maximally extended state. Figures 3, 4 and 5 show the locking mechanism 10 of Figures 2a, 2b and 2c in more detail.

It can be seen in Figures 3-5 that the locking mechanism 10 includes a third member 30. In this example, the third member 30 is a sleeve that circumferentially surrounds the second elongate member 14. The third member 30 is slidably moveable between a first position and a second position. Figure 3 shows the third member 30 in the first position and Figures 4 and 5 show the third member 30 in the second position.

In the first position, the third member 30 is configured to hold the locking member 24 in the first position when the first surface 18 of the first elongate member 12 is in the unlocking region 20. Therefore, the third member 30 helps to ensure that the first elongate member 12 can move relative to the second elongate member 14 when the hold open rod 8 is in the unlocked state without frictionally engaging with the locking member 24 (i.e. the locking member 24 is held out of contact with the first elongate member 12). In this example, the surface of the third member 30 is configured to hold the locking member 24 in the first position by abutting against the surface of the locking member 24 at the point C. In particular, the inside surface of the third member 30 presses down at the point C on the locking member 24 on the opposite side of a pivot 28 than the second surface 26. Thus the end of the locking member 24 with the second surface 26 is lifted towards the third member 30 and away from the first elongate member 12.

When the third member 30 is in its second position, the third member 30 is configured to hold the locking member 24 in the locked position (i.e. in the locking member's second position) when the locking mechanism 10 is in the locked state. Therefore, the third member 30 helps to ensure that the hold open rod 8 remains in the locked state. In this example, the surface of the third member 30 is configured to hold the locking member 24 in its second position by abutting against the surface of the locking member 24 at the point D. In particular, the inside surface of the third member 30 presses down at the point D on the locking member 24 on the same side of the pivot 28 as the second surface 26. Thus the end of the locking member 24 with the second surface 26 is pressed towards the first elongate member 18 into its locked position where its second surface 26 blocks movement of the first surface 18 and thus blocks movement of the first elongate member 12 towards the stowed configuration.

Furthermore, as the third member 30 moves from its first position to its second position, the third member 30 is configured to cause the locking member 24 to move from the locking member's first position to its second position. In this example, the surface of the third member 30 is configured to cause the locking member 24 to move from the first position to the second position by abutting against the surface of the locking member 24 at the point E. The inner surface of the third member 30 at the point E is sloped so as to engage a corresponding sloped surface on the outside of the locking member 24. As the third member 30 slides past the locking member 24, these surfaces engage and deflect the locking member 24 radially inwardly (towards the first elongate member 18) into the locking position.

Similarly, as the third member 30 moves from its second position to its first position, the third member 30 is configured to cause the locking member 24 to move from the locking member's second position to its first position. In this example, the surface of the third member 30 is configured to cause the locking member 24 to move from the second position to the first position by abutting against the surface of the locking member 24 at the point C.

The locking mechanism 10 further includes a first biasing member 32. The first biasing member 32 is configured to bias the third member 30 towards the second position (whereby the locking member 24 is then held in the second position). This helps to ensure that the locking mechanism 10 defaults to the locked state. When locking mechanism is triggered (as discussed below), the biasing member 32 (e.g. coil spring) automatically moves the third member 30 into its second (locked) position without any action from the user. As no specific action is required from the user to engage the locked state, both hands can be used to lift and control the door or hatch (or other equipment) that is to be held by the hold open rod 8. This is safer and easier for the user.

In this example, the first biasing member 32 is a spring. Therefore, in Figure 3, the spring is in a contracted state because the third member 30 is in the first position, and in Figures 4 and 5, the spring is in an extended state because the third member 30 is in the second position.

The locking mechanism 10 further includes a ball (blocking member) 34 situated in an aperture 36 of the second elongate member 14. The ball 34 is moveable between a first position and a second position. In this example, the ball 34 moves in a direction perpendicular to the longitudinal axis 16 of the hold open rod 8 as it moves between the first position and the second position. Figure 3 shows the ball 34 in the first position and Figures 4 and 5 show the ball 34 in the second position. The ball 34 remains in the aperture 36 of the second elongate member 14 as it moves between the first position and the second position.

When the ball 34 is in the first position, the ball 34 is configured to prevent relative movement between the second elongate member 14 and the third member 30 and when the ball 34 is in the second position, the third member 30 is moveable relative to the second member 14. In particular, when the ball 34 is in its first position it lies partly within the third member 30 and partly within the second elongate member 14. As the ball 34 is held axially with little play within the aperture 36, this prevents relative movement of the two members 14, 30.

In this example, the third member 30 includes a recess 38 configured to receive a portion of the ball 34. The recess 38 is configured to receive a portion of the ball 34 when the third member 30 is in its first position and the ball 34 is in its first position, such that the third member 30 is locked in its first position. In this example, the third member 30 is held in its first position because the surface of the ball 34 abuts against the surface of the recess 38, and the ball 34 is held in a fixed axial position in the aperture 36 of the second elongate member 14. This helps to ensure that the locking member 24 is held in the first (unlocked) position when the hold open rod 8 is in the unlocked state by holding the third member 30 in its first position.

In this example, the locking mechanism 10 includes a fourth member 40 moveable between a first position and a second position. The fourth member 40 moves parallel to the longitudinal axis 16 of the hold open rod 8 as it moves between the first position and the second position. Figure 3 shows the fourth member 40 in the first position and Figures 4 and 5 show the fourth member 40 in the second position.

The fourth member 40 comprises a recess 42. The recess 42 is configured to receive a portion of the ball 34 when the ball 34 is in its second position. The recess 42 provides the ball 34 with space to move radially inwards towards the longitudinal axis 16 of the hold open rod 8 (towards the first elongate member 12), i.e. towards the ball's second position. In the ball's second position, there is no significant contact between the ball 34 and the third member 30 (they may be in touching contact, but not so as to prevent relative sliding movement). This allows the third member 30 to move relative to the second elongate member 14, from the third member's first position to its second position.

The locking mechanism 10 includes a second biasing member 44. The second biasing member 44 is configured to bias the fourth member 40 towards its first position during the unlocking process.

The overall mechanism of the hold open rod 8 will now be described. First, the operation of the hold open rod 8 from the stowed, unlocked state to the extended, locked state will be described.

In the stowed state, all of the components of the hold open rod 8 are in their respective first positions. The first surface 18 of the first member 12 is in the unlocking region 20. The locking member 24 is in the first position, such that the locking member 24 is held away from (and out of contact with) the first elongate member 12. The locking member 24 is held in the first position by the third member 30, which is in the first position. In this example, the third member 30 holds the locking member 24 in the first position by contact at the surface C. The third member 30 is held in the first position by the ball 34, which is in the first position, preventing relative movement of the third member 30 and the second elongate member 14. The biasing member 32 is in a compressed state and is held in that state by the blocking action of the ball 34. The ball 34 is positioned in the recess 38 of the third member 30. The ball 34 is being held in position by the aperture 36 in the second elongate member 14 and by the fourth member 40, which is in its first position (in which the recess 42 is not aligned with the ball 34 and therefore does not permit the ball 34 to move away from its first position).

In general, a person will operate the hold open rod 8 by opening the door or hatch (such as the cowl door of an aircraft engine). As the rod 8 is attached at one end to the engine and at the other end to the door, opening the door begins the process of extending the rod 8. The first elongate member 12 slides relative to the second elongate member 14 along the longitudinal axis 16 of the hold open rod 8. While the first elongate member 12 is moving from the first position to the second position, the locking member 24 is held in the first position, away from the first elongate member 12. In particular, the second surface 26 of the locking member 24 is held away from the first surface 18 of the first elongate member 12 so that the first surface 18 can pass the second surface 26 axially into the locking region 22.

In this example, as the first elongate member 12 moves from the first configuration to the second configuration, the first elongate member 12 is configured to cause the fourth member 40 to move from its first position to its second position. In this example, this occurs at the maximally extended state of the hold open rod 8, shown in Figure 2c and Figure 5, when a surface of the first member 12 abuts against a surface of the fourth member 40. The surface of the first member 12 abutting against a surface of the fourth member 40 helps to overcome the bias of the second biasing member 44, which is biasing the fourth member 40 towards the first position. At this point, the first surface 18 of the first member 12 is in the locking region 22.

When the fourth member 40 moves into the second position (compressing the second biasing member 44), the recess 42 becomes aligned with the ball 34 and allows the ball 34 to move into its second position. In moving from the first position to the second position, the ball 34 moves radially inwards towards the longitudinal axis 16 of the hold open rod 8 (towards the first elongate member 12). The ball 34 moves from having a portion inside the recess 36 of the third member 30 to having a portion inside the recess 42 of the fourth member 40. The ball 34 is biased to undergo this transition by the force of the first biasing member 32 which is biasing the third member 30 towards its second position.

As the ball 34 is no longer in blocking contact with the third member 30, the third member 30 is able to move from its first position to its second position. The first biasing member 32 automatically moves the third member 30 into the second position without any action required from the user.

In this example, the third member 30 moves parallel to the longitudinal axis 16 of the hold open rod 8, relative to the second elongate member 14. As the third member 30 moves from its first position to its second position, the inner surface of the third member 30 makes contact with the outer surface of the locking member 24 at the point E. This makes the locking member 24 move from the first position to the second position. In this example, the locking member 24 pivots between the first position and the second position around the pivot 28. Furthermore, the third member 30 is configured to hold the locking member 24 in the second position by contact at the surface D.

In this position, the second surface 26 of the locking member 24 is configured to block the first surface 18 of the first elongate member 12 from moving back into the unlocking region. Therefore, the hold open rod 8 is locked in an extended state. In this example, the first surface 18 of the first elongate member 12 can move back from the fully extended state shown in Figure 2c and Figure 5 to the state shown in Figure 2b and Figure 4, while remaining in the locked state. Therefore, in this state the hold open rod 8 can safely support a mechanical load.

Now, the operation of the hold open rod 8 from the extended, locked state to the stowed, unlocked state will be described.

In the extended, locked state, all of the components of the hold open rod 8 are in their respective second positions. The first surface 18 of the first member 12 is in the locking region 22. The locking member 24 is in the second position, such that the first surface 18 of the first elongate member 12 is blocked from moving in to the unlocking region. The locking member 24 is held in the second position by the third member 30, which is in the second position. In this example, the third member 30 holds the locking member 24 in the second position by contact at the surface D. The third member 30 is in the second position, but is free to move (if subjected to a force to counter the first biasing member 32) as it is not in blocking contact with the ball 34. The ball 34 is positioned in the recess 42 of the fourth member 40, which is in the second position, and is in the aperture 36 in the second elongate member. Thus the fourth member 40 is prevent from moving relative to the second elongate member 14 by the ball 34 and thus the fourth member 40 is held in its second position with the second biasing member 44 in a compressed state.

In general, a person will be operating the hold open rod 8. The person begins by removing the mechanical load on the hold open rod 8, such that the first elongate member 12 can be safely moved relative to the second elongate member 14. The person slides the first elongate member 12 relative to the second elongate member 14 along the longitudinal axis 16 of the hold open rod 8, towards the fully extended position shown in Figure 2c and Figure 5. While the first elongate member 12 is moving, the second surface 26 of the locking member 24 is held in the second position. Therefore, if the load is reapplied to the first elongate member 12, the hold open rod 8 is still locked and can safely support the mechanical load.

While holding the load (and thus holding the rod towards the fully extended configuration), the person using the hold open rod 8 will then move the third member 30 back to the first position. This movement will be against the bias of the first biasing member 32 and thus requires a deliberate physical action from the user. As the third member 30 is moved from the second position to the first position, the third member 30 is configured to move the locking member 24 from the second position to the first position. In this example, this is by contact between the third member 30 and the locking member 24 at the surface C.

When the third member 30 is in the first position, the ball 34 is aligned with the recess 38 in the third member 30 and thus the ball 34 is configured to move from its second position to its first position. The force for this movement comes from the bias of the second biasing member 44, which pushes the fourth member 40 from the second position to the first position. As the fourth member 40 moves from the second position to the first position, the ball 34 is pushed up the sloped surface of the recess 42, such that it moves radially outwards and into the recess 38 in the third member 30. Therefore, the ball 34 is configured to lock the third member 30 in the first position. This holds the first biasing member 32 in the compressed state such that the user can now let go of the third member 30 without it returning automatically to its second position.

When the third member 30 is in the first position, the third member 30 is configured to hold the locking member 24 in the first position by contact at the surface C. In the first position, the locking member 24 is held away from the first elongate member 12 and out of contact with it. Therefore, the first surface 18 of the first elongate member 12 is able to move back into the unlocking region 20. This allows the hold open rod 8 to be returned to the stowed state. As the locking member 24 is held out of contact with the first elongate member 12 throughout this motion, there is no scraping or wear caused by the locking member 24 during the retraction process.

In this example, the locking mechanism 10 further includes a first indicator portion 46 indicative of a locked state and a second indicator portion 48 indicative of an unlocked state. The first indicator portion 46 is only visible when the locking mechanism 10 is in the locked configuration and the second indicator portion 48 is only visible when the locking mechanism 10 is in the unlocked configuration.

This can be seen in Figures 3, 4 and 5. In Figure 3, the locking mechanism 10 is in the unlocked state. The first indicator portion 46 is covered by the third member 30, such that a person using the hold open rod 8 would not be able to see the first indicator portion 46. The second indicator portion 48 is uncovered and could be seen by a person using the hold open rod 8.

Conversely, in Figures 4 and 5, the first indicator portion 46 is uncovered and could be seen by a person using the hold open rod 8. The second indicator portion 48 is covered by the third member 30, such that a person using the hold open rod 8 would not be able to see the second indicator portion 48.

The first and second indicator portions 46, 48 help to ensure that a person using the hold open rod 8 can easily determine from a visual inspection whether the hold open rod 8 is in the locked state or the unlocked state. This helps to ensure that a person using the hold open rod 8 can quickly and easily assess whether it is safe to use the hold open rod 8 to support a mechanical load and/or to assess whether the locking mechanism 10 will permit retraction of the rod 8 to the stowed state.

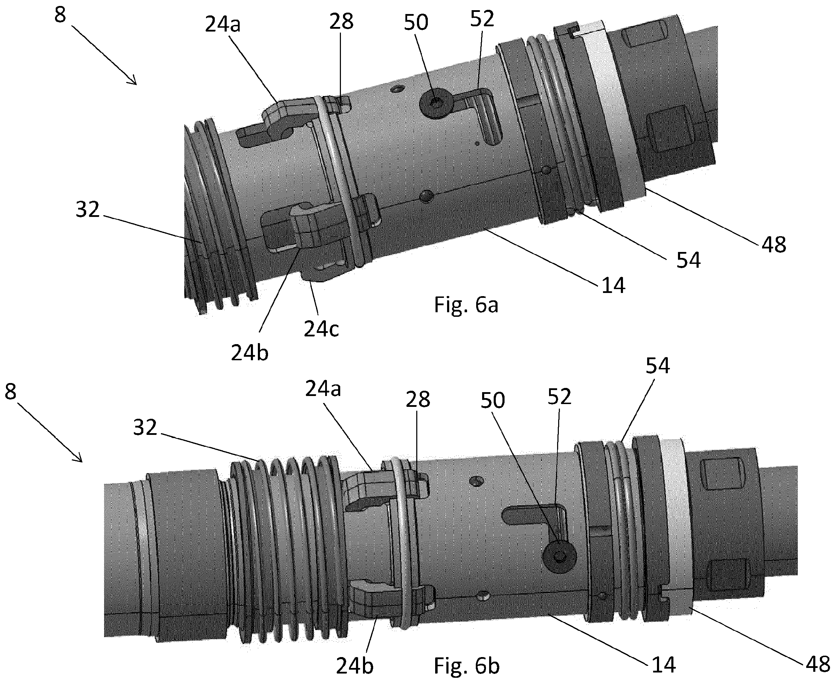

Figures 6a and 6b are perspective views of a hold open rod 8 comprising a locking mechanism 10 of the present invention. Figure 6a shows the locking mechanism 10 in the unlocked state and Figure 6b shows the locking mechanism 10 in the locked state. Figures 6a and 6b show the hold open rod 8 without the third member 30. However, it will be understood that this is for illustrative purposes.

In this example, it can be seen that the locking mechanism 10 includes a plurality of locking members 24a-c that are circumferentially distributed around the hold open rod 8. Using a plurality of locking members 24a-c can help to ensure that the hold open rod 8 is held in the locked position when the locking members 24a-c are in the second position by increasing the overall force exerted on the first surface 18 of the first elongate member 12 by the locking members 24a-c.

In this example, the locking mechanism 10 further comprises a pin 50 and a groove 52. The pin 50 is connected to the third member 30 (not shown) and the groove 52 is formed as an L-shaped aperture in the second elongate member 14.

As the third member 30 moves between the first position and the second position, the pin 50 is configured to move from a first position inside the groove 52 shown in Figure 6a to a second position inside the groove 52 shown in Figure 6b. The movement of the pin 50 in the groove 52 results in the third member 30 moving both axially and angularly between the first position and the second position. Due to the L shape, these are two distinct motions that happen one after the other.

Therefore, the first position of the third member 30 comprises a first axial position and a first angular position, shown in Figure 6a, and the second position of the third member 30 comprises a second axial position and a second angular position.

This can be advantageous compared to a system where the third member 30 only moves along one direction between the first position and the second position. Moving the third member 30 both axially and angularly requires two separate physical movements from a user moving the third member 30 (i.e. movement along two different directions). This helps to ensure that the third member 30 is not accidentally moved by the operator. This can help to prevent the hold open rod 8 being accidentally moved into the unlocked state.

A third biasing member 54 provides a torsional force on the third member 30 to bias it into the second angular position such that the automatic deployment of the third member 30 to its second position involves an automatic axial movement under the force of the first biasing member 32 and an automatic angular movement under the force of the third biasing member 54.

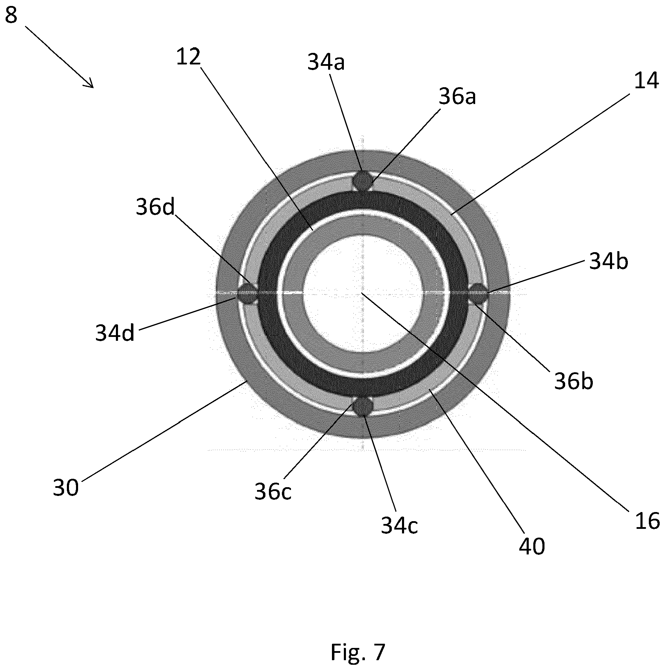

Figure 7 is a cross-sectional view of a hold open rod 8 comprising a locking mechanism 10 of the present invention. The view of Figure 7 is from an end of the hold open rod 8.

It can be seen that in this example, the first elongate member 12, the second elongate member 14, the third member 30 and the fourth member 40 are all concentric hollow tubes, centred around the longitudinal axis 16 of the hold open rod 8. The third member 30 is the outermost component of the hold open rod 8, such that it can be moved between the first position and the second position by a user gripping it from the outside.

In this example, the locking mechanism 10 includes a plurality of balls 34a-d moveable between a first position and a second position and configured to prevent relative movement between the second elongate member 14 and the third member 30 when they are in their first positions. The plurality of balls 34a-d are circumferentially distributed around the hold open rod 8. Each of the plurality of balls 34a-d are situated in an aperture 36a-d of the second elongate member 14 and operate in the manner described above. Using a plurality of balls 34a-d can help to ensure that the third member 30 is held in the first position by increasing the overall force exerted on the third member 30 by the balls 34a-d.

## Claims

1. A hold open rod (8) comprising:
a first elongate member (12) and a second elongate member (14), slidably arranged to move between a first configuration and a second configuration, the second configuration being extended relative to the first configuration; and
a locking mechanism (10) operable between a locked state and an unlocked state and arranged, in the locked state, to prevent the first and second elongate members (12, 14) from returning to the first configuration;
wherein the first elongate member (12) comprises a first surface (18);
wherein the locking mechanism (10) comprises a locking member (24) moveable between a first position and a second position, the locking member (24) comprising a second surface (26);
wherein
as the first and second elongate members (12, 14) move from the first configuration to the second configuration the first surface (18) moves from an unlocking region (20) of the second elongate member (14) to a locking region (22) of the second elongate member (14);
wherein, the locking mechanism (10) is arranged such that when the first surface (18) is in the unlocking region (20), the locking member (24) is held in the first position;
wherein, the locking mechanism (10) is arranged such that the locking mechanism (10) is operable to the locked state only when the first surface (18) is in the locking region (22);
wherein, in the first position, the locking member (24) is held out of contact with the first elongate member (12); and
wherein, in the second position, the second surface (26) of the locking member (24) is configured to block movement of the first surface (18) into the unlocking region (20).

2. A hold open rod (8) as claimed in claim 1, wherein the first surface (18) of the first elongate member (12) and the second surface (26) of the locking member (24) are configured to abut when the locking member (24) is in the locked state.

3. A hold open rod (8) as claimed in claim 2, wherein the first surface (18) of the first elongate member (12) and the second surface (26) of the locking member (24) abut at an angle of less than 90 degrees to the longitudinal axis (16) of the second elongate member (14), such that the locking member (24) is hooked over the first elongate member (12).

4. A hold open rod (8) as claimed in any preceding claim, wherein the locking mechanism (10) further comprises a third member (30);
wherein the third member (30) is configured to cause the locking member (24) to move from the first position to the second position; and/or
wherein the third member (30) is configured to cause the locking member (24) to move from the second position to the first position.

5. A hold open rod (8) as claimed in claim 4, wherein the third member (30) is configured to hold the locking member (24) in the first position when the first surface (18) is in the unlocking region (20); and/or
wherein the third member (30) is configured to hold the locking member (24) in the second position when the locking mechanism (10) is in the locked state.

6. A hold open rod (8) as claimed in claim 4 or 5, wherein the third member (30) is moveable between a first position and a second position;
wherein the third member (30) is arranged such that when the third member (30) is in the first position, the locking member (24) is held in the first position; and
wherein the third member (30) is arranged such that when the third member (30) is in the second position, the locking member (24) is held in the second position.

7. A hold open rod (8) as claimed in claim 4, 5 or 6, wherein the third member (30) is moveable between a first position and a second position;
wherein, as the third member (30) moves from the first position to the second position, the third member (30) is configured to cause the locking member (24) to move from the first position to the second position; and/or
wherein, as the third member (30) moves from the second position to the first position, the third member (30) is configured to cause the locking member (24) to move from the second position to the first position.

8. A hold open rod (8) as claimed in claim 6 or 7, wherein the locking mechanism (10) comprises a first biasing member (32) configured to bias the third member (30) towards the second position.

9. A hold open rod (8) as claimed in any of claims 4 to 8, wherein the locking mechanism (10) further comprises a blocking member (34) situated in an aperture (36) of the second elongate member (14) and moveable between a first position and a second position;
wherein, when the blocking member (34) is in the first position, the blocking member (34) is configured to prevent relative movement between the second elongate member (14) and the third member (30).

10. A hold open rod (8) as claimed in claim 9, further comprising a fourth member (40) comprising a recess (42);
wherein the recess (42) is configured to receive a portion of the blocking member (34) when the blocking member (34) is in the second position;
wherein, when the blocking member (34) is in the second position, the third member (30) is moveable relative to the second elongate member (14).

11. A hold open rod (8) as claimed in claim 10, wherein the fourth member (40) is moveable between a first position and a second position;
wherein the recess (42) is configured to receive a portion of the blocking member (34) when the fourth member (40) is in the second position.

12. A hold open rod (8) as claimed in claim 11, wherein, as the first elongate member (12) moves from the first configuration to the second configuration, the first elongate member (12) is configured to cause the fourth member (40) to move from the first position to the second position.

13. A hold open rod (8) as claimed in claim 11 or 12, wherein the locking mechanism (10) comprises a second biasing member (44);
wherein the second biasing member (44) is configured to bias the fourth member (40) towards the first position.

14. A hold open rod (8) as claimed in any of claims 4 to 13, wherein the third member (30) is a sleeve; and
wherein the third member (30) circumferentially surrounds the second elongate member (14).

15. A hold open rod (8) as claimed in claim 14, wherein the third member (30) is moveable between a first position and a second position;
wherein the first position of the third member (30) comprises a first axial position and a first angular position; and
wherein the second position of the third member (30) comprises a second axial position and a second angular position.

## Patentansprüche

1. Offenhaltestange (8), umfassend:
ein erstes längliches Element (12) und ein zweites längliches Element (14), die verschiebbar angeordnet sind, um sich zwischen einer ersten Konfiguration und einer zweiten Konfiguration zu bewegen, wobei die zweite Konfiguration relativ zu der ersten Konfiguration erweitert ist; und
einen Verriegelungsmechanismus (10), der zwischen einem verriegelten Zustand und einem entriegelten Zustand betätigt werden kann und in dem verriegelten Zustand so angeordnet ist, dass er verhindert, dass das erste und das zweite längliche Element (12, 14) in die erste Konfiguration zurückkehren;
wobei das erste längliche Element (12) eine erste Oberfläche (18) umfasst;
wobei der Verriegelungsmechanismus (10) ein zwischen einer ersten Position und einer zweiten Position bewegliches Verriegelungselement (24) umfasst, wobei das Verriegelungselement (24) eine zweite Oberfläche (26) umfasst;
wobei sich die erste Oberfläche (18) während des Bewegens des ersten und des zweiten länglichen Elements (12, 14) von der ersten Konfiguration in die zweite Konfiguration von einem Entriegelungsbereich (20) des zweiten länglichen Elements (14) in einen Verriegelungsbereich (22) des zweiten länglichen Elements (14) bewegt;
wobei der Verriegelungsmechanismus (10) so angeordnet ist, dass, wenn sich die erste Oberfläche (18) in dem Entriegelungsbereich (20) befindet, das Verriegelungselement (24) in der ersten Position gehalten wird;
wobei der Verriegelungsmechanismus (10) so angeordnet ist, dass der Verriegelungsmechanismus (10) nur dann in den verriegelten Zustand versetzt werden kann, wenn sich die erste Oberfläche (18) in dem Verriegelungsbereich (22) befindet;
wobei in der ersten Position das Verriegelungselement (24) außerhalb des Kontakts mit dem ersten länglichen Element (12) gehalten wird; und
wobei in der zweiten Position die zweite Oberfläche (26) des Verriegelungselements (24) so konfiguriert ist, dass sie die Bewegung der ersten Oberfläche (18) in den Entriegelungsbereich (20) blockiert.

2. Offenhaltestange (8) nach Anspruch 1, wobei die erste Oberfläche (18) des ersten länglichen Elements (12) und die zweite Oberfläche (26) des Verriegelungselements (24) so konfiguriert sind, dass sie aneinander anliegen, wenn sich das Verriegelungselement (24) in dem verriegelten Zustand befindet.

3. Offenhaltestange (8) nach Anspruch 2, wobei die erste Oberfläche (18) des ersten länglichen Elements (12) und die zweite Oberfläche (26) des Verriegelungselements (24) in einem Winkel von weniger als 90 Grad zu der Längsachse (16) des zweiten länglichen Elements (14) aneinander anliegen, so dass das Verriegelungselement (24) über das erste längliche Element (12) eingehängt ist.

4. Offenhaltestange (8) nach einem der vorhergehenden Ansprüche, wobei der Verriegelungsmechanismus (10) ferner ein drittes Element (30) umfasst;
wobei das dritte Element (30) so konfiguriert ist, dass es das Verriegelungselement (24) dazu veranlasst, sich von der ersten Position in die zweite Position zu bewegen; und/oder
wobei das dritte Element (30) so konfiguriert ist, dass es das Verriegelungselement (24) dazu veranlasst, sich von der zweiten Position in die erste Position zu bewegen.

5. Offenhaltestange (8) nach Anspruch 4, wobei das dritte Element (30) so konfiguriert ist, dass es das Verriegelungselement (24) in der ersten Position hält, wenn sich die erste Oberfläche (18) in dem Entriegelungsbereich (20) befindet; und/oder
wobei das dritte Element (30) so konfiguriert ist, dass es das Verriegelungselement (24) in der zweiten Position hält, wenn sich der Verriegelungsmechanismus (10) in dem verriegelten Zustand befindet.

6. Offenhaltestange (8) nach Anspruch 4 oder 5, wobei das dritte Element (30) zwischen einer ersten Position und einer zweiten Position beweglich ist;
wobei das dritte Element (30) so angeordnet ist, dass das Verriegelungselement (24) in der ersten Position gehalten wird, wenn sich das dritte Element (30) in der ersten Position befindet; und
wobei das dritte Element (30) so angeordnet ist, dass das Verriegelungselement (24) in der zweiten Position gehalten wird, wenn sich das dritte Element (30) in der zweiten Position befindet.

7. Offenhaltestange (8) nach Anspruch 4, 5 oder 6, wobei das dritte Element (30) zwischen einer ersten Position und einer zweiten Position beweglich ist;
wobei das dritte Element (30), während das dritte Element (30) sich von der ersten Position in die zweite Position bewegt, so konfiguriert ist, dass es das Verriegelungselement (24) dazu veranlasst, sich von der ersten Position in die zweite Position zu bewegen; und/oder
wobei das dritte Element (30), während das dritte Element (30) sich von der zweiten Position in die erste Position bewegt, so konfiguriert ist, dass es das Verriegelungselement (24) dazu veranlasst, von der zweiten Position in die erste Position zu bewegen.

8. Offenhaltestange (8) nach Anspruch 6 oder 7, wobei der Verriegelungsmechanismus (10) ein erstes Vorspannelement (32) umfasst, das so konfiguriert ist, dass es das dritte Element (30) in Richtung der zweiten Position vorspannt.

9. Offenhaltestange (8) nach einem der Ansprüche 4 bis 8, wobei der Verriegelungsmechanismus (10) ferner ein Blockierelement (34) umfasst, das sich in einer Öffnung (36) des zweiten länglichen Elements (14) befindet und zwischen einer ersten Position und einer zweiten Position beweglich ist;
wobei das Blockierelement (34), wenn das Blockierelement (34) sich in der ersten Position befindet, so konfiguriert ist, dass es eine relative Bewegung zwischen dem zweiten länglichen Element (14) und dem dritten Element (30) verhindert.

10. Offenhaltestange (8) nach Anspruch 9, die ferner ein viertes Element (40) umfasst, das eine Aussparung (42) umfasst;
wobei die Aussparung (42) so konfiguriert ist, dass sie einen Teil des Blockierelements (34) aufnimmt, wenn sich das Blockierelement (34) in der zweiten Position befindet;
wobei, wenn sich das Blockierelement (34) in der zweiten Position befindet, das dritte Element (30) relativ zu dem zweiten länglichen Element (14) beweglich ist.

11. Offenhaltestange (8) nach Anspruch 10, wobei das vierte Element (40) zwischen einer ersten Position und einer zweiten Position beweglich ist;
wobei die Aussparung (42) so konfiguriert ist, dass sie einen Teil des Blockierelements (34) aufnimmt, wenn sich das vierte Element (40) in der zweiten Position befindet.

12. Offenhaltestange (8) nach Anspruch 11, wobei, während sich das erste längliche Element (12) von der ersten Konfiguration in die zweite Konfiguration bewegt, das erste längliche Element (12) so konfiguriert ist, dass es das vierte Element (40) dazu veranlasst, sich von der ersten Position in die zweite Position zu bewegen.

13. Offenhaltestange (8) nach Anspruch 11 oder 12, wobei der Verriegelungsmechanismus (10) ein zweites Vorspannelement (44) umfasst;
wobei das zweite Vorspannelement (44) so konfiguriert ist, dass es das vierte Element (40) in Richtung der ersten Position vorspannt.

14. Offenhaltestange (8) nach einem der Ansprüche 4 bis 13, wobei das dritte Element (30) eine Hülse ist; und
wobei das dritte Element (30) umlaufend das zweite längliche Element (14) umgibt.

15. Offenhaltestange (8) nach Anspruch 14, wobei das dritte Element (30) zwischen einer ersten Position und einer zweiten Position beweglich ist;
wobei die erste Position des dritten Elements (30) eine erste axiale Position und eine erste Winkelposition umfasst; und
wobei die zweite Position des dritten Elements (30) eine zweite axiale Position und eine zweite Winkelposition umfasst.

## Revendications

1. Tige de maintien en position ouverte (8) comprenant :
un premier élément allongé (12) et un deuxième élément allongé (14), agencés de manière coulissante pour se déplacer entre une première configuration et une deuxième configuration, la deuxième configuration étant étendue par rapport à la première configuration ; et
un mécanisme de verrouillage (10) opérable entre un état verrouillé et un état déverrouillé et agencé, dans l'état verrouillé, pour empêcher les premier et deuxième éléments allongés (12, 14) de revenir à la première configuration ;
dans laquelle le premier élément allongé (12) comprend une première surface (18) ;
dans laquelle le mécanisme de verrouillage (10) comprend un élément de verrouillage (24) mobile entre une première position et une seconde position, l'élément de verrouillage (24) comprenant une seconde surface (26) ;
dans laquelle, au fur et à mesure que les premier et deuxième éléments allongés (12, 14) se déplacent de la première configuration à la deuxième configuration, la première surface (18) se déplace d'une région de déverrouillage (20) du deuxième élément allongé (14) à une région de verrouillage (22) du deuxième élément allongé (14) ;
dans laquelle le mécanisme de verrouillage (10) est agencé de sorte que lorsque la première surface (18) est dans la région de déverrouillage (20), l'élément de verrouillage (24) est maintenu dans la première position ;
dans laquelle le mécanisme de verrouillage (10) est agencé de sorte que le mécanisme de verrouillage (10) est utilisable à l'état verrouillé uniquement lorsque la première surface (18) est dans la région de verrouillage (22) ;
dans laquelle, dans la première position, l'élément de verrouillage (24) est maintenu hors contact avec le premier élément allongé (12) ; et
dans laquelle, dans la seconde position, la seconde surface (26) de l'élément de verrouillage (24) est conçue pour bloquer le mouvement de la première surface (18) dans la région de déverrouillage (20).

2. Tige de maintien en position ouverte (8) selon la revendication 1, dans laquelle la première surface (18) du premier élément allongé (12) et la seconde surface (26) de l'élément de verrouillage (24) sont conçues pour buter lorsque l'élément de verrouillage (24) est à l'état verrouillé.

3. Tige de maintien en position ouverte (8) selon la revendication 2, dans laquelle la première surface (18) du premier élément allongé (12) et la seconde surface (26) de l'élément de verrouillage (24) sont en butée à un angle inférieur à 90 degrés par rapport à l'axe longitudinal (16) du deuxième élément allongé (14), de sorte que l'élément de verrouillage (24) est accroché sur le premier élément allongé (12).

4. Tige de maintien en position ouverte (8) selon l'une quelconque des revendications précédentes, dans laquelle le mécanisme de verrouillage (10) comprend en outre un troisième élément (30) ;
dans laquelle le troisième élément (30) est conçu pour amener l'élément de verrouillage (24) à se déplacer de la première position à la seconde position ; et/ou
dans laquelle le troisième élément (30) est conçu pour amener l'élément de verrouillage (24) à se déplacer de la seconde position à la première position.

5. Tige de maintien en position ouverte (8) selon la revendication 4, dans laquelle le troisième élément (30) est conçu pour maintenir l'élément de verrouillage (24) dans la première position lorsque la première surface (18) est dans la région de déverrouillage (20) ; et/ou
dans laquelle le troisième élément (30) est conçu pour maintenir l'élément de verrouillage (24) dans la seconde position lorsque le mécanisme de verrouillage (10) est à l'état verrouillé.

6. Tige de maintien en position ouverte (8) selon la revendication 4 ou 5, dans laquelle le troisième élément (30) est mobile entre une première position et une seconde position ;
dans laquelle le troisième élément (30) est agencé de sorte que lorsque le troisième élément (30) est dans la première position, l'élément de verrouillage (24) est maintenu dans la première position ; et
dans laquelle le troisième élément (30) est agencé de sorte que lorsque le troisième élément (30) est dans la seconde position, l'élément de verrouillage (24) est maintenu dans la seconde position.

7. Tige de maintien en position ouverte (8) selon la revendication 4, 5 ou 6, dans laquelle le troisième élément (30) est mobile entre une première position et une seconde position ;
dans laquelle, au fur et à mesure que le troisième élément (30) se déplace de la première position à la seconde position, le troisième élément (30) est conçu pour amener l'élément de verrouillage (24) à se déplacer de la première position à la seconde position ; et/ou
dans laquelle, au fur et à mesure que le troisième élément (30) se déplace de la seconde position à la première position, le troisième élément (30) est conçu pour amener l'élément de verrouillage (24) à se déplacer de la seconde position à la première position.

8. Tige de maintien en position ouverte (8) selon la revendication 6 ou 7, dans laquelle le mécanisme de verrouillage (10) comprend un premier élément de sollicitation (32) conçu pour solliciter le troisième élément (30) vers la seconde position.

9. Tige de maintien en position ouverte (8) selon l'une quelconque des revendications 4 à 8, dans laquelle le mécanisme de verrouillage (10) comprend en outre un élément de blocage (34) situé dans une ouverture (36) du deuxième élément allongé (14) et mobile entre une première position et une seconde position ;
dans laquelle, lorsque l'élément de blocage (34) est dans la première position, l'élément de blocage (34) est conçu pour empêcher un mouvement relatif entre le deuxième élément allongé (14) et le troisième élément (30).

10. Tige de maintien en position ouverte (8) selon la revendication 9, comprenant en outre un quatrième élément (40) comprenant un évidement (42) ;
dans laquelle l'évidement (42) est conçu pour recevoir une partie de l'élément de blocage (34) lorsque l'élément de blocage (34) est dans la seconde position ;
dans laquelle, lorsque l'élément de blocage (34) est dans la seconde position, le troisième élément (30) est mobile par rapport au deuxième élément allongé (14).

11. Tige de maintien en position ouverte (8) selon la revendication 10, dans laquelle le quatrième élément (40) est mobile entre une première position et une seconde position ;
dans laquelle l'évidement (42) est conçu pour recevoir une partie de l'élément de blocage (34) lorsque le quatrième élément (40) est dans la seconde position.

12. Tige de maintien en position ouverte (8) selon la revendication 11, dans laquelle, au fur et à mesure que le premier élément allongé (12) se déplace de la première configuration à la deuxième configuration, le premier élément allongé (12) est conçu pour amener le quatrième élément (40) à se déplacer de la première position à la seconde position.

13. Tige de maintien en position ouverte (8) selon la revendication 11 ou 12, dans laquelle le mécanisme de verrouillage (10) comprend un second élément de sollicitation (44) ;
dans laquelle le second élément de sollicitation (44) est conçu pour solliciter le quatrième élément (40) vers la première position.

14. Tige de maintien en position ouverte (8) selon l'une quelconque des revendications 4 à 13, dans laquelle le troisième élément (30) est un manchon ; et
dans laquelle le troisième élément (30) entoure circonférentiellement le deuxième élément allongé (14).

15. Tige de maintien en position ouverte (8) selon la revendication 14, dans laquelle le troisième élément (30) est mobile entre une première position et une seconde position ;
dans laquelle la première position du troisième élément (30) comprend une première position axiale et une première position angulaire ; et
dans laquelle la seconde position du troisième élément (30) comprend une seconde position axiale et une seconde position angulaire.
